# EUROPÄISCHE PATENTSCHRIFT

(11) **EP 1 049 598 B1**
(45) Veröffentlichungstag und Bekanntmachung des Hinweises auf die Patenterteilung: **29.09.2004**
(21) Anmeldenummer: 98949811.8
(22) Anmeldetag: 15.10.1998
(51) Int. Cl.: B60K 15/035

(54) **VORRICHTUNG ZUM VERHINDERN DES ÜBERFÜLLENS EINES KRAFTSTOFFTANKES**
DEVICE FOR PREVENTING A FUEL TANK TO BE OVERFILLED
DISPOSITIF PERMETTANT D'EVITER DE REMPLIR DE MANIERE EXCESSIVE UN RESERVOIR DE CARBURANT

(30) Priorität: 27.11.1997 AT 201397
(43) Veröffentlichungstag der Anmeldung: 08.11.2000
(73) Patentinhaber: Tesma Motoren- und Getriebetechnik Ges.m.b.H., 8160 Preding-Krottendorf (AT)
(72) Erfinder: FEICHTINGER, Stefan, A-8184 Anger (AT); PALVÖLGYI, Sandor, A-8200 Ungerdorf (AT)
(74) Vertreter: Kovac, Werner
(86) Internationale Anmeldenummer: PCT/AT1998/000245
(87) Internationale Veröffentlichungsnummer: WO 1999/028143

(56) Entgegenhaltungen:
- WO-A-98/05525
- US-A- 5 230 360

## Beschreibung

Die Erfindung betrifft eine Vorrichtung zum Verhindern des überfüllens eines mit einem Einfüllstutzen und einer Betankungs-Entlüftungsleitung versehenen Kraftstofftankes, wobei oberhalb der Einmündung der Betankungs-Entlüftungsleitung eine ins Freie oder zu einem Auffangbehälter führende Betriebs-Entlüftungsleitung in den Kraftstofftank mündet, in welche eine Ventileinrichtung eingeschaltet ist, die während des Füllens des Kraftstofftankes geschlossen und in der übrigen Zeit geöffnet ist,

Eine Vorrichtung dieser Art ist aus der EP 0 464 420 oder der DE 43 43 498 bekannt. Bei den bekannten Vorrichtungen ist die Ventileinrichtung für die Betriebs-Entlüftungsleitung seitlich am oberen Ende des Einfüllstutzens befestigt und wird über einen in das Einfüllstutzenende hineinragenden Ventilbetätigungskörper von der zum Betanken eingeführten Zapfpistole bzw. einer von dieser aufgestoßenen Einfüllstutzen-Verschlußklappe in die Schließstellung versetzt. Diese Lösung ist mechanisch aufwendig und fertigungsintensiv. In der nicht vorveröffentlichten internationalen Anmeldung Nr. PCT/AT 97/00177 derselben Anmelderin wurde daher bereits eine wesentlich einfacher und kostengünstiger aufgebaute Vorrichtung vorgeschlagen, indem die Ventileinrichtung einen Ventilverschlußkörper aufweist, der in Richtung vom Kraftstofftank wegführend mit einem Ventilsitz in Eingriff versetzbar, in die Offenstellung vorgespannt und zumindest im gesperrten Zustand von einem strömungsbegrenzenden Nebenschlußweg überbrückt ist.

Diese Art von Ventileinrichtung ist ein vom Einfüllstutzenende vollständig getrennter Bauteil, der allein durch die auftretenden Betriebsdrücke bzw. Gasströmungen betätigt wird, was eine aufwendige mechanische Kupplung mit der eingreifenden Zapfpistole bzw. der Verschlußklappe oder Druckmembran erübrigt. Die Strömungsbegrenzung im Nebenschlußweg wird so groß gewählt, daß der sich in der Endphase des Betankens in dem Tankraum oberhalb der Mündung der Betankungs-Entlüftungsleitung aufbauende Überdruck innerhalb jener Zeitspanne, in der ein durchschnittlicher Benützer versucht wäre nachzutanken, nicht wesentlich abbaut. Dadurch ist gewährleistet, daß der Tankraum oberhalb der Betankungs-Entlüftungsleitung während des Tankens nicht signifikant mit Kraftstoff befüllt wird. Erst einige Zeit nach der Beendigung des Tankvorganges wird der Druck über den Nebenschlußweg langsam abgebaut, wodurch allfälliger Kraftstoff aus dem Einfüllstutzen unter geringfügiger Füllung des Tankraumes oberhalb der Mündung der Betankungs-Entlüftungsleitung in den Tank nachrinnt. Sobald der Druckgradient über den Nebenschlußweg einen vorgegebenen Wert unterschreitet, öffnet die Ventileinrichtung und gibt einen wesentlich größeren Strömungsquerschnitt als der Nebenschlußweg frei, wobei dieser Strömungsquerschnitt die normale Be- und Entlüftung während des Betriebes zuläßt. Im Fahrbetrieb tritt keine nennenswerte Gasströmung über die Ventileinrichtung auf, so daß diese geöffnet bleibt und ermöglicht, daß Druckschwankungen im Inneren des Tankes über den großen Strömungsquerschnitt der Ventileinrichtung sofort ausgeglichen werden.

Wenn unmittelbar beim Tankvorgang eine starke Erhitzung des Kraftstoffes auftritt, ist damit auch eine starke Ausgasung des Kraftstoffes verbunden, welche unter Umständen nicht rasch genug über den Nebenschlußweg abgebaut werden kann. Die vorliegende Erfindung setzt sich zum Ziel, die genannte Vorrichtung so zu verbessern, daß auch eine solche gefährliche Überdrucksituation ausgeschlossen ist. Dieses Ziel wird erfindungsgemäß durch die im kennzeichnenden Teil des Anspruches 1 enthaltenen Merkmale erreicht.

Auf diese Weise wird, wenn der Druckabfall über den Nebenschlußweg zu groß wird, der Überdruckventilspalt geöffnet, u.zw. auf sehr einfache Weise dadurch, daß der gegen den Ventilsitz arbeitende Ventilverschlußkörper die Vorspannkraft des letzteren überwindet. Dadurch wird eine Überdruckventilfunktion geschaffen, welche die beschriebenen ausnahmehaften Überdrucksituationen sicher verhindert.

Gemäß einer vorteilhaften Ausführungsform der Erfindung wird vorgesehen, daß der Ventilsitz in Form einer Hülse ausgebildet ist, deren Innenseite zur Anlage des Ventilverschlußkörpers und deren Außenseite zur Anlage am Innenabsatz dient, und die mittels einer Druckfeder gegen den Innenabsatz und den Ventilverschlußkörper vorgespannt ist. Diese Konstruktion ermöglicht einen besonders kompakten, ausschließlich axial und damit störungsunanfällig arbeitenden Aufbau der Vorrichtung.

Eine weitere bevorzugte Ausführungsform der Erfindung zeichnet sich dadurch aus, daß der Nebenschlußweg durch Riefen, Kerben od.dgl. in der Oberfläche des Ventilverschlußkörpers und/oder des Ventilsitzes gebildet ist. Dies stellt eine besonders einfache Art der Errichtung des Nebenschlußweges dar.

In jedem Fall ist es besonders vorteilhaft, wenn der Ventilverschlußkörper durch sein Eigengewicht oder durch Federbelastung in die Offenstellung vorgespannt ist. Dies stellt eine besonders einfache Möglichkeit dar, ein druck- bzw. strömungsgesteuertes Schließen der Ventileinrichtung oberhalb eines vorgegebenen Schwellwertes zu realisieren.

Ein weiterer Aspekt der Erfindung liegt in der Schaffung einer Ventileinrichtung für eine Vorrichtung der oben beschriebenen Art, gekennzeichnet durch einen Ventilverschlußkörper, der mit einem Ventilsitz in Eingriff versetzbar, in die Offenstellung vorgespannt und zumindest im gesperrten Zustand von einem strömungsbegrenzenden Nebenschlußweg überbrückt ist, wobei der Ventilsitz seinerseits beweglich gelagert ist, mit einem Innenabsatz der Ventileinrichtung einen Überdruckventilspalt bildet, und in die Schließstellung und in Richtung gegen den Ventilverschlußkörper vorgespannt ist.

Die Erfindung wird nachstehend an Hand eines in den Zeichnungen dargestellten Ausführungsbeispieles näher erläutert. In den Zeichnungen zeigen
Fig. 1 ein Blockschaltbild der erfindungsgemäßen Vorrichtung, die
Fig. 2 und 3 die Ventileinrichtung gemäß dem Stammpatent in der Stellung "Fahren" (Fig. 2) bzw. "Tanken" (Fig. 3), und die
Fig. 4 bis 6 die Vorrichtung gemäß der Erfindung in der Stellung "Fahren" (Fig. 4), "Tanken" (Fig. 5) und "Tanken-Überdrucksituation" (Fig. 6).

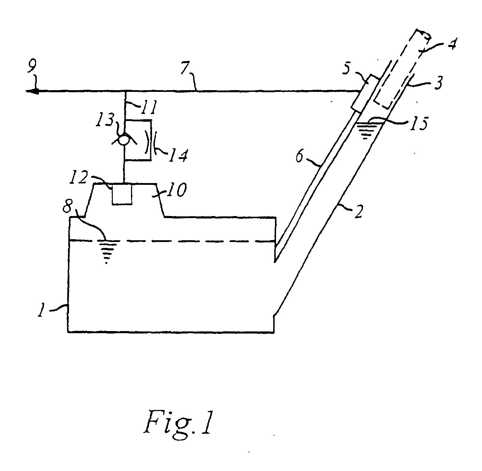

In Fig. 1 ist ein Kraftstofftank 1 mit einem Einfüllstutzen 2 gezeigt. Das obere Ende 3 des Einfüllstutzens 2 nimmt während des Tankens ein Füllrohr 4 einer nicht weiter dargestellten Zapfpistole auf.

Vom oberen Bereich des Kraftstofftankes 1 geht eine Betankungs-Entlüftungsleitung 6 aus, welche in eine Abzugleitung 7 mündet und das Füllen des Tankes 1 bis zu dem Pegel 8 ermöglicht.

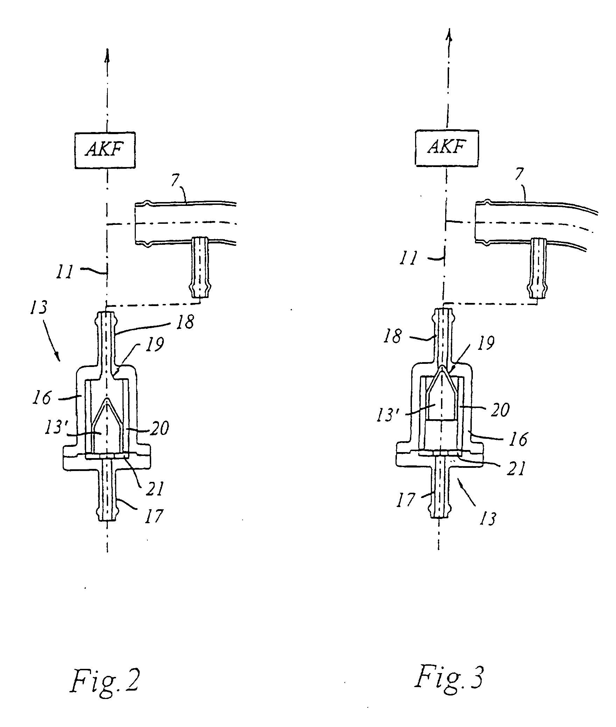

Die Abzugleitung 7 führt bei 9 entweder direkt ins Freie oder zu einem in den Fig. 2 und 3 schematisch und strichliert dargestellten Auffangbehälter eines sog. ORVR-Systems (onboard refuelling vapor recovery system). Ein solcher Auffangbehälter ist mit einem Aktivkohlefilter (AKF) zur Absorption von Kraftstoffdämpfen ausgestattet und wird während des Betriebes des Fahrzeuges von Verbrennungszufuhrgasen durchspült, welche die Kraftstoffrückstände aus dem Aktivkohlefilter lösen und der Verbrennung zuführen.

Ist ein derartiges ORVR-System vorhanden, wird die Abzugleitung 7 über ein Ventil 5 auch an das obere Ende 3 des Einfüllstutzens 2 angeschlossen. Das Ventil 5 wird während des Betankens geöffnet, um die direkt neben dem einströmenden Kraftstoff auftretenden Kraftstoffdämpfe dem Auffangbehälter zuzuführen.

Vom Kraftstofftank 1 geht oberhalb der Einmündung der Betankungs-Entlüftungsleitung 6, im dargestellten Fall vom obersten Punkt eines oberen Luftraumes 10, eine in die Abzugleitung 7 mündende Betriebs-Entlüftungsleitung 11 aus. Die Mündung der Betriebs-Entlüftungsleitung 11 im Kraftstofftank 1 kann z.B. mit Hilfe eines "Roll-over"-Ventiles 12 verschlossen werden, das im Falle eines Umkehrens des Tankes bei einem Unfall schließt. In die Betriebs-Entlüftungsleitung 11 ist eine Ventileinrichtung 13 eingeschaltet, die von einem strömungsbegrenzenden Nebenschlußweg 14 überbrückt ist.

Die Ventileinrichtung 13 sperrt in Richtung vom Kraftstofftank 1 wegführend. Ihr Ventilverschlußkörper 13', der beim gezeigten Beispiel als zylindrischer Körper mit angesetztem Verschlußkegel ausgebildet ist, ist in die Offenstellung vorgespannt, wie später noch ausführlicher erläutert wird.

Die Funktionsweise der dargestellten Vorrichtung ist wie folgt. Wenn der Kraftstofftank 1 bis auf den Pegel 8 gestiegen ist, ist die Betankungs-Entlüftungsleitung 6 verschlossen und zur weiteren Entlüftung steht nur mehr die Betriebs-Entlüftungsleitung 11 zur Verfügung. Die beim Schließen der Betankungs-Entlüftungsleitung 6 schlagartig ansteigende Gasströmung in der Betriebs-Entlüftungsleitung 11 versetzt den Ventilverschlußkörper 13' aus seiner Ruhe-Offenstellung (Fig. 2) in die Schließstellung (Fig. 3), so daß nur mehr der Nebenschlußweg 14 zur Entlüftung des Raumes 10 verbleibt. Der Strömungsquerschnitt des Nebenschlußweges 14 ist jedoch so gering, daß der darüber abfallende Druckgradient nicht ausreichend rasch abgebaut werden kann, um eine sofortige Entlüftung des Raumes 10 zu gewährleisten. Der Raum 10 bleibt daher vom Kraftstoff ungefüllt, und der Kraftstoffspiegel steigt statt dessen im Einfüllstutzen 2 bis auf einen Pegel 15 an, bei dem die Automatik der Zapfpistole abschaltet.

Der Druck im Raum 10 kann sich über den Nebenschlußweg 14 nur langsam in gewissem Ausmaß abbauen, d.h. über einen ausreichenden zeitlichen Abstand zum Tankvorgang, so daß der im Einfüllstutzen 2 verbliebene Kraftstoff unter geringfügiger Füllung des Raumes 10 in den Tank 1 nachrinnt. Im Fahrbetrieb ist sodann der Füllstand im Einfüllstutzen 2 nicht höher als im Tank 1 selbst.

Wenn der Druck im Raum 10 auf einen vorgegebenen Schwellwert abgesunken ist, welcher durch die Vorspannung des Ventilverschlußkörpers 13' definiert wird, öffnet die Ventileinrichtung 13. Das Ventil 12 verhindert ein ungewolltes Austreten von Kraftstoff über die Betriebs-Entlüftungsleitung 11. Im Fahrbetrieb gestattet der große Strömungsquerschnitt der geöffneten Ventileinrichtung 13 einen unmittelbaren und ungehinderten Gasdruckausgleich zwischen dem Kraftstofftank 1 und dem Freien bzw. dem Auffangbehälter.

Der konstruktive Aufbau des Nebenschlußweges 14 ist in den Fig. 2 und 3 gezeigt. Die Ventileinrichtung 13 besitzt ein etwa rohrförmiges Gehäuse 16 mit axialen Ein- bzw. Auslässen 17, 18 an beiden Enden. Im Gehäuse 16 ist ein hohler Ventilverschlußkörper 13' axial geführt und an einem ringförmigen Ventilsitz 19 zur Anlage bringbar, welcher auf der Innenseite des Gehäuses 16 nahe dem Auslaß 18 angeordnet ist. Die Ventileinrichtung 13 wird in der Regel in der dargestellten Einbaulage montiert, d.h. senkrecht, wobei der Ventilverschlußkörper 13' durch sein Eigengewicht in die Offenstellung (Fig. 2) vorgespannt ist.

Der Nebenschlußweg 14 bildet sich in der Schließstellung (Fig. 3) der Ventileinrichtung 13 dadurch aus, daß die Oberfläche des Ventilverschlußkörpers 13' und/oder des Ventilsitzes 19 mit Riefen, Kerben od.dgl. versehen ist, so daß keine vollständige Abdichtung zwischen Ventilverschlußkörper 13' und Ventilsitz 19 in der Schließstellung (Fig. 3) gegeben ist.

Es versteht sich, daß der Nebenschlußweg 14 jedoch auch als gesonderter, die Ventileinrichtung 13 permanent überbrükkender strömungsbegrenzender Bauteil ausgebildet sein könnte, beispielsweise in Form einer der Ventileinrichtung 13 parallel geschalteten Leitung mit definierter Engstelle, oder einfach durch eine Bohrung im Ventilverschlußkörper 13'.

Anstelle des gezeigten Ventilverschlußkörpers 13' könnte auch jede andere Art von Ventilverschlußkörper verwendet werden, z.B. ein Ventilteller, eine Ventilklappe, eine Ventilkugel od.dgl. Bei dem gezeigten Beispiel wird der Ventilverschlußkörper 13' an seinem Außenumfang mit Hilfe von sich axial erstrekkenden, über den Innenumfang des Gehäuses 19 verteilten Radialrippen 20 geführt und schlägt in der in Fig. 2 gezeigten Offenstellung an über den Umfang verteilten Innenabsätzen 21 des Gehäuses 16 an, so daß in dieser Stellung eine Umströmung des Ventilverschlußkörpers 13' über die Zwischenräume zwischen den Ansätzen 21 und den Radialrippen 20 möglich ist. Alternativ könnte der Ventilverschlußkörper 13' von einer zentralen Ventilspindel geführt werden. Der Ventilverschlußkörper 13' und das Gehäuse 16 sind bevorzugt aus Kunststoff geformt, es sind jedoch auch andere Materialien wie Metallblech, Aluminium od.dgl. vorstellbar.

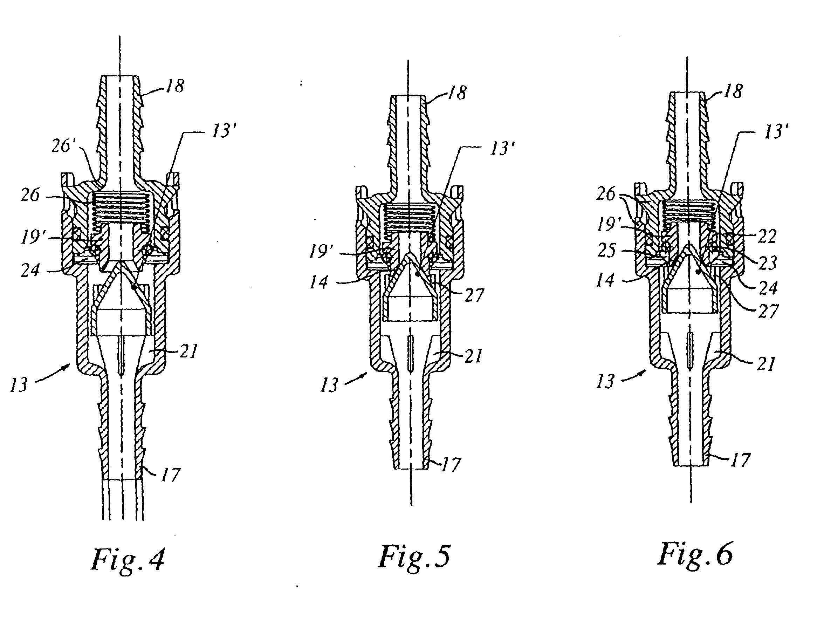

Bei den erfindungsgemäßen Ausführungsformen der Ventileinrichtung 13 gemäß den Fig. 4 bis 6 werden gleiche Bezugszeichen für gleiche Teile wie in den Fig. 1 bis 3 verwendet. Anstelle des starren Ventilsitzes 19 der Fig. 2 und 3 wird hier ein in Form einer Hülse ausgebildeter, axial beweglich gelagerter Ventilsitz 19' verwendet, um eine zusätzliche Überdruckventilfunktion zu erzeugen.

Die Hülse bzw. der Ventilsitz 19' ist an seiner Außenseite mit einem Umfangsabsatz 22 und einem Dichtring 23 versehen, welche mit einem Innenabsatz 24 der Ventileinrichtung 13 einen Ventilspalt 25 bilden (Fig. 6). Der Innenabsatz 24 wird im gezeigten Fall durch einen Ring gebildet, der zwischen den beiden ineinandergeschobenen Teilen eines hier zweiteilig ausgeführten Gehäuses 16 festgelegt ist.

Der Ventilsitz 19' wird mit Hilfe einer Druckfeder 26, die sich an einem weiteren Innenabsatz 26' des Gehäuses 16 abstützt, in Richtung auf den Innenabsatz 24 vorgespannt, um in der Ruhestellung den Ventilspalt 24 zu schließen (Fig. 4 und 5). Erst wenn der Druck am Einlaß 17, d.h. der Druckabfall über den Nebenschlußweg 14, die Kraft der Feder 26 überwindet, wird der Überdruckventilspalt 25 geöffnet (Fig. 6).

Um bei der dargestellten Ausführungsform ein allfälliges Verlegen des Ventilspaltes 24 durch den hier in Form eines Hohlkonus ausgeführten Ventilverschlußkörpers 13' zu vermeiden, ist letzterer mit Abstandshalterippen 27 ausgestattet, welche am Innenabsatz 24 auf dessen anderer Seite anschlagen (Fig. 5 und 6) und eine Durchströmung zulassen. Wird der Druck in der in Fig. 6 gezeigten Stellung noch weiter erhöht, kann sich daher der Ventilsitz 19' weiter nach oben vom Innenabsatz 24 entfernen, um einen größeren Durchströmquerschnitt freizugeben, während der Ventilverschlußkörper 13' stehenbleibt.

Selbstverständlich ist die dargestellte Ausführungsform des Überdruckventiles nur beispielhaft, wesentlich ist, daß der Ventilsitz 19' in irgendeiner Form mit der Ventileinrichtung 13 einen zusätzlichen Ventilspalt 25 bildet, welcher von einem auf den Ventilverschlußkörper 13' übermäßig einwirkenden Druck geöffnet wird.

## Patentansprüche

1. Vorrichtung zum Verhindern des Überfüllens eines mit einem Einfüllstutzen und einer Betankungs-Entlüftungsleitung versehenen Kraftstofftankes (1), wobei oberhalb der Einmündung der Betankungs-Entlüftungsleitung eine ins Freie oder zu einem Auffangbehälter führende Betriebs-Entlüftungsleitung (11) in den Kraftstofftank mündet, in welche eine Ventileinrichtung (13) eingeschaltet ist, die während des Füllens des Kraftstofftankes geschlossen und in der übrigen Zeit geöffnet ist, **dadurch gekennzeichnet,**
**daß** die Ventileinrichtung einen Ventilverschlußkörper (13') aufweist, der in Richtung vom Kraftstofftank wegführend mit einem Ventilsitz (19') in Eingriff versetzbar, in die Offenstellung vorgespannt und zumindest im gesperrten Zustand von einem strömungsbegrenzenden Nebenschlußweg (14) überbrückt ist, über welchen der Druck in dem oberhalb der Betankungs-Entlüftungsleitung (6) während des Betankens verbleibenden Raum nur langsam abbaubar ist und
**daß** der Ventilsitz (19') seinerseits beweglich gelagert ist, in die Schließstellung und in Richtung gegen den Ventilverschlußkörper (13') vorgespannt ist und mit einem Innenabsatz (24) der Ventileinrichtung (13) einen erst beim Überschreiten eines gewissen Überdruckes frei werdenden Überdruckventilspalt (25) bildet.

2. Vorrichtung nach Anspruch 1, **dadurch gekennzeichnet, daß** der Ventilsitz (19') in Form einer Hülse ausgebildet ist, deren Innenseite zur Anlage des Ventilverschlußkürpers (13') und deren Außenseite zur Anlage am Innenabsatz (24) dient, und die mittels einer Druckfeder (26) gegen den Innenabsatz (24) und den Ventilverschlußkörper (13') vorgespannt ist.

3. Vorrichtung nach Anspruch 1 oder 2, **dadurch gekennzeichnet, daß** der Nebenschlußweg (14) durch Riefen, Kerben od.dgl. in der Oberfläche des Ventilverschlußkörpers (13') und/oder des Ventilsitzes (19') gebildet ist.

4. Vorrichtung nach einem der Ansprüche 1 bis 3, **dadurch gekennzeichnet, daß** der Ventilverschlußkörper (13') durch sein Eigengewicht oder durch Federbelastung in die Offenstellung vorgespannt ist.

5. Vorrichtung nach einem der Ansprüche 1 bis 4, **dadurch gekennzeichnet, daß** der Ventilverschlußkörper (13') in Form einer Kugel, einer Klappe oder eines Tellers ausgebildet ist.

6. Ventileinrichtung für eine Vorrichtung nach einem der Ansprüche 1 bis 5, **gekennzeichnet durch** einen Ventilverschlußkörper (13'), der mit einem Ventilsitz (19') in Eingriff versetzbar, in die Offenstellung vorgespannt und zumindest im gesperrten Zustand von einem strömungsbegrenzenden Nebenschlußweg (14) überbrückt ist, über welchen der Druck in dem oberhalb der Betankungs-Entlüftungsleitung (6) während des Betankens verbleibenden Raum nur langsam abbaubar ist, wobei der Ventilsitz (19') seinerseits beweglich gelagert ist, mit einem Innenabsatz (24) der Ventileinrichtung (13) einen erst beim *Überschreiten eines gewissen Überdruckes frei werdenden* Überdruckventilspalt (25) bildet, und in die Schließstellung und in Richtung gegen den Ventilverschlußkörper (13') vorgespannt ist.

## Claims

1. Device for preventing the overfilling of a fuel tank (1) provided with a filler neck and a filling vent line, an operational vent line (11), which leads to the outside or to a collecting tank, opening into the fuel tank above the opening into the filling vent line, in which operational vent line there is connected a valve device (13) which is closed during filling of the fuel tank and is open in the remaining time, **characterized in that** the valve device has a valve closing member (13') which can be engaged with a valve seat (19') in the direction leading away from the fuel tank, is preloaded into the open position and is bridged, at least in the blocked state, by a flow-restricting partial-flow path (14), and **in that**, for its part, the valve seat (19') is movably mounted, forms a pressure relief valve clearance (25) with an inner shoulder (24) of the valve device (13), and is preloaded into the closed position and in the direction of the valve closing member (13').

2. Device according to Claim 1, **characterized in that** the valve seat (19') is constructed in the form of a sleeve whose inner side serves for bearing the valve closing member (13') and whose outer side serves for bearing against an inner shoulder (24), and which is preloaded by means of a compression spring (26) against the inner shoulder (24) and the valve closing member (13').

3. Device according to Claim 1 or 2, **characterized in that** the partial-flow path (14) is formed by grooves, notches or the like in the surface of the valve closing member (13') and/or of the valve seat (19').

4. Device according to one of Claims 1 to 3, **characterized in that** the valve closing member (13') is preloaded into the open position by its dead weight or by spring loading.

5. Device according to one of Claims 1 to 4, **characterized in that** the valve closing member (13') is constructed in the form of a ball, a flap or a plate.

6. Valve device for a device according to one of Claims 1 to 5, **characterized by** a valve closing member (13') which can be engaged with a valve seat (19'), is preloaded into the open position and is bridged, at least in the blocked state, by a flow-restricting partial-flow path (14), by which the pressure in the space remaining in the space above the filling vent line 6 during filling is lowerable only slowly, the valve seat (19') for its part being movably mounted, forming a pressure relief valve clearance (25) with an inner shoulder (24) of the valve device (13), which clearance (25) does not open until the pressure passes a certain overpressure, and being preloaded into the closed position and in the direction of the valve closing member (13').

## Revendications

1. Dispositif destiné à empêcher de trop remplir un réservoir de carburant (1) doté d'une tubulure de remplissage et d'une conduite de ventilation et de remplissage, dans lequel une conduite de ventilation et de service (11) menant à l'air libre ou à un collecteur débouche dans le réservoir de carburant au-dessus de l'embouchure de la conduite de ventilation et de remplissage, et dans lequel un dispositif formant clapet (13) est monté dans la conduite de ventilation et de service pour être fermé pendant le remplissage du réservoir de carburant et ouvert le reste du temps, **caractérisé en ce que**
le dispositif formant clapet comporte un corps de fermeture de clapet (13') qui peut être déplacé pour s'engager avec un siège de clapet (19') en s'écartant du réservoir de carburant, qui est précontraint dans la position ouverte, et qui est ponté, au moins dans l'état bloqué, par une dérivation de limitation d'écoulement (14) permettant de ne réduire que lentement la pression régnant dans l'espace restant au-dessus de la conduite de ventilation et de remplissage (6) pendant le remplissage, et
le siège de clapet (19'), quant à lui monté de façon à être mobile, est précontraint dans la position fermée et en direction du corps de fermeture de clapet (13'), et forme avec un épaulement intérieur (24) du dispositif formant clapet (13) une fente de clapet de surpression (25) qui n'est libérée que lorsqu'une certaine surpression est dépassée.

2. Dispositif selon la revendication 1, **caractérisé en ce que** le siège de clapet (19') est conformé en manchon dont le côté intérieur sert d'appui au corps de fermeture de clapet (13') et dont le côté extérieur sert d'appui à l'épaulement intérieur (24), et qui est précontraint au moyen d'un ressort de compression (26) vers l'épaulement intérieur (24) et le corps de fermeture de clapet (13').

3. Dispositif selon la revendication 1 ou 2, **caractérisé en ce que** la dérivation (14) est formé par des rainures, des encoches ou analogues, ménagées dans la surface extérieure du corps de fermeture de clapet (13') et/ou du siège de clapet (19').

4. Dispositif selon l'une des revendications 1 à 3, **caractérisé en ce que** le corps de fermeture de clapet (13') est précontraint dans la position ouverte par son propre poids, ou bien par une force exercée par un ressort.

5. Dispositif selon l'une des revendications 1 à 4, **caractérisé en ce que** le corps de fermeture de clapet (13') est conformé en bille, en volet, ou en disque.

6. Dispositif formant clapet destiné à un dispositif selon l'une des revendications 1 à 5, **caractérisé par** une corps de fermeture de clapet (13') qui peut être déplacé pour s'engager avec un siège de clapet (19'), qui est précontraint dans la position ouverte et qui est ponté, au moins dans l'état bloqué, par une dérivation de limitation d'écoulement (14) permettant de ne réduire que lentement la pression régnant dans l'espace restant au-dessus de la conduite de ventilation et de remplissage (6) pendant le remplissage ; et dans lequel le siège de clapet (19') quant à lui monté de façon à être mobile, forme avec un épaulement intérieur (24) du dispositif formant clapet (13) une fente de clapet de surpression (25) qui n'est libérée que lorsqu'une certaine surpression est dépassée, et est précontraint dans la position fermée et en direction du corps de fermeture de clapet (13').
